# EUROPEAN PATENT APPLICATION

(11) **EP 4 597 712 A1**
(43) Date of publication of application: **06.08.2025**
(21) Application number: 24221732.1
(22) Date of filing: 19.12.2024
(51) Int. Cl.: H01M 50/271, H01M 50/289, H01M 50/209

(54) **BATTERY MODULE, ENERGY STORAGE DEVICE AND ENERGY STORAGE SYSTEM**

(30) Priority: 31.01.2024 CN 202410139343
(71) Applicant: Hithium Tech HK Limited, Hong Kong (HK)
(72) Inventor: WANG, Jian, Fujian, 361100 (CN); LIN, Weijie, Fujian, 361100 (CN)
(74) Representative: RGTH

(57) **Abstract**

Disclosed is a battery module, including batteries arranged along a first direction that is a thickness direction of the battery and an integrated busbar cover plate. The integrated busbar cover plate is disposed at tops of the batteries. Limiting through hole groups arranged at intervals along the first direction are provided on the integrated busbar cover plate, correspond to the batteries one by one, and are matched with poles of corresponding batteries. In the first direction, a length of a limiting through hole in the limiting through hole group near an end part of the integrated busbar cover plate is greater than that of a limiting through hole in the limiting through hole group located in a middle part of the integrated busbar cover plate. The length of the limiting through hole is a size of the limiting through hole along the first direction.

## Description

### TECHNICAL FIELD

The present application relates to the technical field of energy storage, and in particular, to a battery module, an energy storage device, and an energy storage system.

### BACKGROUND

The battery module is an important component of the energy storage device. The battery module comprises a plurality of arranged batteries and an integrated busbar cover plate provided at the tops of the plurality of batteries. A plurality of limiting through hole groups are provided on the integrated busbar cover plate, and the positioning of the integrated busbar cover plate during installation can be realized through the cooperation of the poles of the batteries and the limiting through hole groups.

### SUMMARY

The present disclosure provides a battery module, an energy storage device and an energy storage system.

In a first aspect, the present disclosure provides a battery module. The battery module comprises: a plurality of batteries arranged in a first direction and an integrated busbar cover plate arranged at tops of the plurality of batteries. The first direction is a thickness direction of the battery. A plurality of limiting through hole groups which are arranged at an interval in the first direction are provided on the integrated busbar cover plate. The plurality of limiting through hole groups correspond to the plurality of batteries one by one. The limiting through hole groups are matched with poles of corresponding batteries. In the first direction, a length of a limiting through hole in the limiting through hole group near an end part of the integrated busbar cover plate is greater than a length of a limiting through hole in the limiting through hole group located in a middle part of the integrated busbar cover plate. The length of the limiting through hole is a size of the limiting through hole in the first direction.

In a second aspect, the present disclosure also provides an energy storage device, comprising the battery module according to any one item in the first aspect.

In a third aspect, the present disclosure also provides an energy storage system. The energy storage system comprises: an electric energy conversion device, capable of converting energy of other form into electric energy; an electrical load; and the energy storage device of the second aspect. The energy storage device is capable of storing at least a portion of the electric energy converted by the electric energy conversion device. The energy storage device is further configured to provide the electric energy to the electrical load.

### BRIEF DESCRIPTION OF THE DRAWINGS

In order to more clearly illustrate the technical solutions of the embodiments of the present disclosure, the drawings that are needed in the embodiments will be briefly described below, and it is obvious that the drawings in the following description are only some embodiments of the present disclosure, and other drawings may be obtained according to these drawings without inventive effort for those of ordinary skill in the art.
FIG. 1 is a schematic structural diagram of a battery module according to an embodiment of the present disclosure;
FIG. 2a is a partial exploded diagram of a battery module according to an embodiment of the present disclosure;
FIG. 2b is a schematic diagram of a portion of FIG. 2a;
FIG. 3a is a schematic structural diagram of an integrated busbar cover plate according to an embodiment of the present disclosure;
FIG. 3b is a schematic structural diagram of an integrated busbar cover plate in the related art;
FIG. 4 is a schematic structural diagram of a portion of the integrated busbar cover plate according to an embodiment of the present disclosure;
FIG. 5 is a schematic diagram of an arrangement structure of a first piece and a second piece according to an embodiment of the present disclosure;
FIG. 6 is a schematic structural diagram of an energy storage device according to an embodiment of the present disclosure;
FIG. 7 is a schematic structural diagram of an energy storage system according to an embodiment of the present disclosure.

### Description of reference signs:

100-battery module; 110-battery; 110a-first battery; 110b-second battery; 110c-third battery; 111-positive pole; 112-negative pole; 120-integrated busbar cover plate; 121-limiting through hole group; 1211-first limiting through hole; 1212-second limiting through hole; 121a-first group of limiting through hole group; 121b-second group of limiting through hole group; 121c-third group of limiting through hole group; 122-sinking groove; 1221-first sinking groove; 1222-second sinking groove; 122a-first groove wall; 122b-second groove wall; 122c-third groove wall; 122d-fourth groove wall; 122e-first recess; 122f-second recess; 123-explosion-proof valve avoidance through hole; 131-first piece; 132-second piece;
200-energy storage device;
300-energy storage system; 310-electric energy conversion device; 320-electrical load.

### DETAILED DESCRIPTION

In the following, the technical solutions in the embodiments of the present disclosure will be clearly and completely described with reference to the accompanying drawings. Obviously, the described embodiments are only some of the embodiments of the present disclosure, instead of all the embodiments. Based on the embodiments in the present disclosure, all other embodiments obtained by those of ordinary skill in the art without creative labor belong to the scope of protection of the present disclosure.

In the present disclosure, the terms "upper", "lower", "left", "right", "front", "rear", "top", "bottom", "inner", "outer", "vertical", "horizontal", "lateral", "longitudinal" and the like indicate orientations or positional relationships based on those shown in the drawings. These terms are only used to better describe the present disclosure and its embodiments, and are not intended to limit that the indicated devices, elements or components have the particular orientation or are configured and operated in the particular orientation.

Moreover, some of the terms described above may be used to indicate other meanings in addition to the orientations or positional relationships, for example, the term "upper" may also be used to indicate some sort of attachment or connection in some cases. The specific meaning of these terms in the present disclosure will be understood by those of ordinary skill in the art according to the specific circumstances.

Furthermore, the terms "install," "configure," "provide," "connect," and "join" are to be construed broadly. For example, it may be a fixed connection, a removable connection, or a unitary construction; it may be a mechanical connection, or an electrical connection; it may be a direct connection, or an indirect connection through an intervening medium, or it may be an internal communication between two devices, elements, or components. The specific meaning of the above terms in the present disclosure can be understood by those of ordinary skill in the art according to the specific circumstances.

In addition, the terms "first," "second," and the like, are used primarily to distinguish between different devices, elements, or components (the particular types and configurations may be the same or different), and are not used to indicate or imply the relative importance and number of the indicated devices, elements, or components. Unless otherwise indicated, the meaning of "a plurality of" is two or more.

As described in the Background of the present application, when the number of the plurality of batteries is relatively large, the size of the integrated busbar cover plate will be relatively large, and the tolerance of the arrangement of the plurality of batteries is relatively large. In this case, when the integrated busbar cover plate is installed on the plurality of batteries, the compatibility of the integrated busbar cover plate is relatively poor.

In order to solve the technical problems mentioned in the Background, the present disclosure provides a battery module, an energy storage device and an energy storage system. In a first direction, a length of a limiting through hole in a limiting through hole group near an end part of an integrated busbar cover plate is greater than that of a limiting through hole in the limiting through hole group located in a middle part of the integrated busbar cover plate. In this way, the limiting through hole group in the middle part of the integrated busbar cover plate can be matched with poles of the battery as a reference, and the length of the limiting through hole in the limiting through hole group near the end part of the integrated busbar cover plate is greater than the length of the limiting through hole in the limiting through hole group located in the middle part of the integrated busbar cover plate, so that the assembly tolerance between the limiting through hole group close to the end part of the integrated busbar cover plate and the poles of the corresponding battery is increased, and interference between the poles on a plurality of batteries and the limiting through hole groups on the integrated busbar cover plate is avoided when the integrated busbar cover plate is installed, thereby improving the compatibility of the integrated busbar cover plate.

The present application is illustrated in detail below by means of specific embodiments.

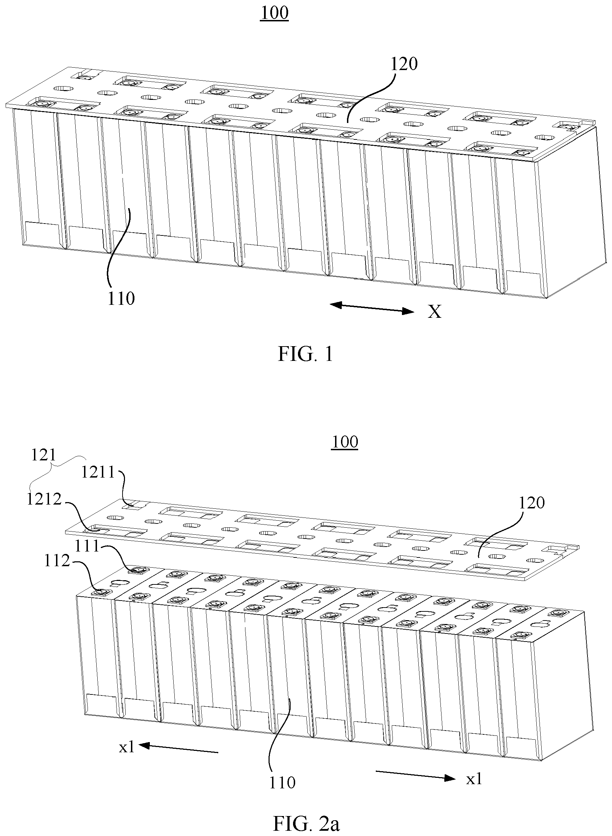

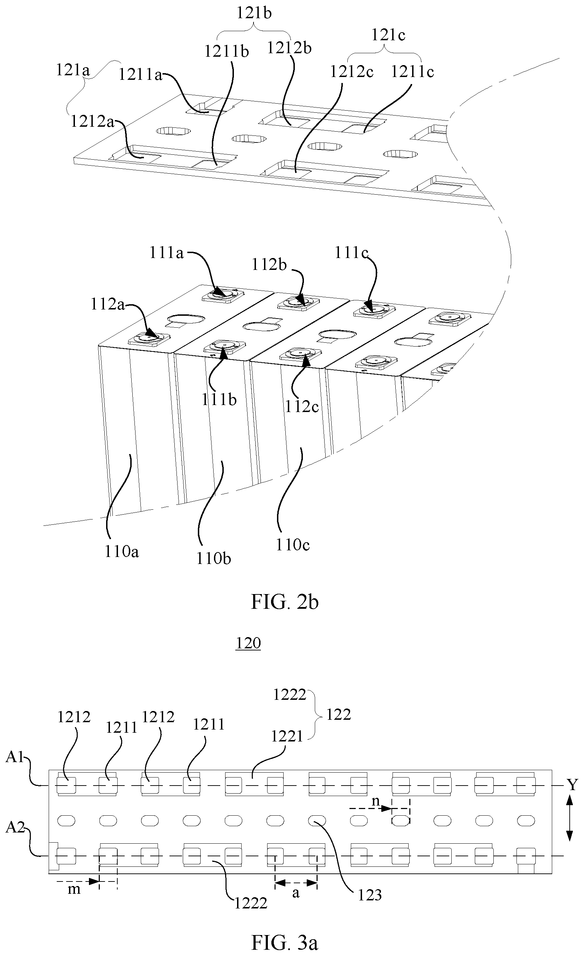

Referring to FIGs. 1, 2a and 2b, an embodiment of the present application provides a battery module 100. The battery module 100 comprises a plurality of batteries 110 and an integrated busbar cover plate 120. The plurality of batteries 110 are arranged along a first direction, and the first direction is a thickness direction of the battery 110. The integrated busbar cover plate 120 is disposed at the tops of the plurality of batteries 110. A plurality of limiting through hole groups 121 which are arranged at an interval along the first direction are provided on the integrated busbar cover plate 120. The plurality of limiting through hole groups 121 correspond to the plurality of batteries 110 one by one. The limiting through hole groups 121 are matched with poles of the corresponding batteries 110. In the first direction, the length of the limiting through hole in the limiting through hole group 121 which is close to the end part of the integrated busbar cover plate 120 is greater than the length of the limiting through hole (the length of limiting through hole is shown as m in FIG. 3a) in the limiting through hole group 121 which is located in the middle part of the integrated busbar cover plate 120. The length of the limiting through hole is the size of the limiting through hole along the first direction.

The above-mentioned first direction refers to the direction indicated by an arrow X in FIG. 1, and the first direction mentioned below refers to the direction indicated by the arrow X in FIG. 1. The plurality of limiting through hole groups 121 correspond to the plurality of batteries 110 one by one. It may be understood that the number of the plurality of limiting through holes 121 is equal to that of the plurality of batteries 110, and the positions thereof correspond to each other.

Referring to FIG. 2b, the plurality of limiting through hole groups 121 are illustrated. The first group of limiting through hole groups 121a is matched with the poles on the first battery 110a, the second group of limiting through hole groups 121b is matched with the poles on the second battery 110b, and the third group of limiting through hole groups 121c is matched with the pole s on the third battery 110c ... along the first direction from left to right. When the positive pole 111 and the negative pole 112 of the battery 110 are located at the top of the battery 110, the first limiting through hole 1211a of the first group of limiting through holes 121a is matched with the positive pole (i.e. the pole directed by 111a) on the first battery 110a, the second limiting through hole 1212a of the first group of limiting through holes 121a is matched with the negative pole (i.e. the pole directed by 112a) on the first battery 110a, the first limiting through hole 1211b of the second group of limiting through holes 121b is matched with the positive pole (i.e. the pole directed by 111b) on the second battery 110b, the second limiting through hole 1212b of the second group of limiting through holes 121b is matched with the negative pole (i.e. the pole directed by 112b) on the second battery 110b, the first limiting through hole 1211c of the third group of limiting through holes 121c is matched with the positive pole (i.e. the pole directed by 111c) on the third battery 110c, and the second limiting through hole 1212c of the third group of limiting through holes 121c is matched with the negative pole (i.e. the pole directed by 112c) on the third battery 110c...

In addition, the middle part of the integrated busbar cover plate 120 refers to a position where a center of the integrated busbar cover plate 120 in the first direction is located or a position near the center. The shape of the above-mentioned limiting through hole is not limited, and the shape of the limiting through hole depends on the shapes of the poles of the battery 110. For example, if the poles of the battery 110 are a quadrangular prism, then the limiting through hole is a rectangular hole, if the poles of the battery 110 are a cylinder, then the limiting through hole is a round hole or a flat round hole.

In this embodiment, since the length of the limiting through hole in the limiting through hole group 121 near the end part of the integrated busbar cover plate 120 is greater than the length of the limiting through hole in the limiting through hole group 121 located in the middle part of the integrated busbar cover plate 120 in the first direction, the integrated busbar cover plate 120 can be installed by using the matching of the limiting through hole group 121 in the middle part of the integrated busbar cover plate 120 with the poles of the corresponding battery 110 as the matching reference. Therefore, compared with the scheme in which the limiting through hole group 121 at any end part of the integrated busbar cover plate 120 in the first direction being matched with the poles of the corresponding battery 110 is used as the matching reference, the tolerance between the limiting through hole group 121 far from the matching reference and the poles of the corresponding battery 110 can be reduced, thereby reducing the installation difficulty of the integrated busbar cover plate 120.

In addition, when matching the limiting through hole group 121 in the middle part of the integrated busbar cover plate 120 with the poles of the corresponding battery 110 is used as a matching reference, the tolerance between the limiting through hole group 121 near the end part of the integrated busbar cover plate 120 along the first direction and the poles of the corresponding battery 110 is relatively large. In order to avoid the interference between the limiting through hole group 121 near the end part of the integrated busbar cover plate 120 and the poles of the corresponding battery 110, in this embodiment, the length of the limiting through hole in the limiting through hole group 121 near the end part of the integrated busbar cover plate 120 is made to be greater than the length of the limiting through hole in the limiting through hole group 121 located in the middle part of the integrated busbar cover plate 120 along the first direction, thereby increasing the assembly tolerance between the limiting through hole group 121 near the end part of the integrated busbar cover plate 120 and the poles of the corresponding battery 110, and avoiding the interference between the poles on the plurality of batteries 110 and the limiting through hole groups 121 on the integrated busbar cover plate 120 when the integrated busbar cover plate 120 is installed, so as to improve the compatibility of the integrated busbar cover plate 120.

Further, the battery 110 may be at least one of a cylindrical battery 110, a square battery 110, and the like.

In some possible embodiments, referring to FIGs. 2a, 2b and 3a, the lengths of the limiting through holes in the plurality of limiting through hole groups 121 are increased progressively in a direction from the middle part of the integrated busbar cover plate 120 to the end part of the integrated busbar cover plate 120.

The direction from the middle part of the integrated busbar cover plate 120 to the end part of the integrated busbar cover plate 120 refers to the direction indicated by the arrow x1 in FIG. 2a.

In addition, the lengths of the limiting through holes in the plurality of limiting through hole groups 121 are increased progressively in the direction from the middle part of the integrated busbar cover plate 120 to the end part of the integrated busbar cover plate 120, which may be understood that the lengths of the limiting through holes in the plurality of limiting through hole groups 121 may be increased gradually according to an arithmetic progression, or may be increased gradually according to a non-arithmetic progression. For example, a difference between the length of the limiting through hole in the limiting through hole group 121 near the middle part of the integrated busbar cover plate 120 and the length of the limiting through hole in the adjacent limiting through hole group 121 is B1, and a difference between the length of the limiting through hole in the limiting through hole group 121 adjacent to the limiting through hole group 121 near the middle part of the integrated busbar cover plate 120 and the length of the limiting through hole in the adjacent other limiting through hole group 121 is B2, if the lengths of the limiting through holes in the groups of limiting through hole groups 121 are increased progressively according to the arithmetic progression, then B1 is equal to B2, otherwise, B1 and B2 are unequal.

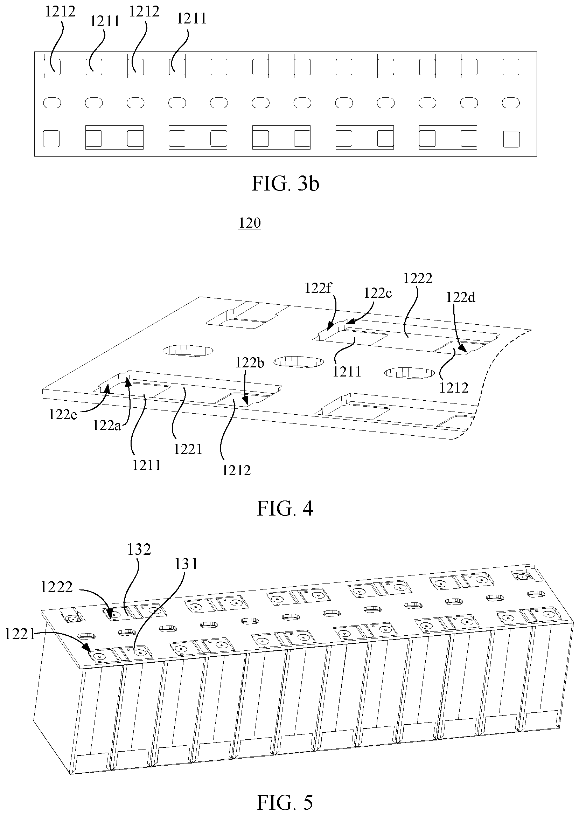

Furthermore, referring to FIGs. 3a and 3b, it can be clearly seen that the lengths of the limiting through holes in the plurality of limiting through hole groups 121 in FIG. 3a are increased progressively in the direction from the middle part of the integrated busbar cover plate 120 to the end part of the integrated busbar cover plate 120, whereas the lengths of the limiting through holes in FIG. 3b in the related art are equal in the first direction.

The arrangement tolerance of the plurality of batteries 110 is also accumulated and increased along the direction from the middle part of the integrated busbar cover plate 120 to the end part of the integrated busbar cover plate 120. Therefore, by making the lengths of the limiting through holes in the plurality of limiting through hole groups 121 increase progressively along the direction from the middle part of the integrated busbar cover plate 120 to the end part of the integrated busbar cover plate 120, the interference between the limiting through holes in the limiting through hole groups 121 and the poles of the batteries 110 can be further avoided.

In some possible embodiments, the distances (i.e., the distance indicated by *α* in FIG. 3a) between the central axes of the limiting through holes in each adjacent two limiting through hole groups 121 are equal.

Since the distances between the central axes of the limiting through holes in each adjacent two limiting through hole groups 121 are equal, the lengths of the limiting through holes in the plurality of limiting through hole groups 121 are symmetrically and progressively increased about the central axes of the corresponding limiting through holes along the direction from the middle part of the integrated busbar cover plate 120 to the end part of the integrated busbar cover plate 120. Thus, it is avoided that the length from the central axis of the corresponding limiting through hole to one end of the limiting through hole in the first direction increases while the length from the central axis of the corresponding limiting through hole to the other end of the limiting through hole is unchanged. In other words, it is avoided that the progressively increased length of the limiting through hole in the first direction is only added to one end of the limiting through hole and not to both ends of the limiting through hole in the first direction. Therefore, the interference between the other end of the limiting through hole, which is not increased in the first direction, and the poles of the corresponding battery 110 is avoided, and the compatibility of the integrated busbar cover plate 120 is further improved.

In some possible embodiments, the difference between the lengths of the limiting through holes in each adjacent two limiting through hole groups of the limiting through hole groups 121 along the direction from the middle part of the integrated busbar cover plate 120 to the end part of the integrated busbar cover plate 120 ranges from 0.5mm to 1mm.

For example, the limiting through hole group 121 located in the middle part is a first through hole group, two limiting through hole groups 121 adjacent to the first through hole group are second through hole groups, and another limiting through hole group 121 adjacent to the second through hole group is a third through hole group. The length increment range of the limiting through holes in the plurality of limiting through hole groups 121 refers to the range of the difference between the first through hole group and the second through hole group, and the range of the difference between the second through hole group and the third through hole group.

If the length increment range of the limiting through holes in the plurality of limiting through hole groups 121 is smaller than 0.5mm along the direction from the middle part of the integrated busbar cover plate 120 to the end part of the integrated busbar cover plate 120, then the length increment range of the limiting through holes in the plurality of limiting through hole groups 121 is relatively small, so that the arrangement tolerance of the plurality of batteries 110 is not favorably eliminated. On the contrary, if the length increment range of the limiting through holes in the plurality of limiting through hole groups 121 is larger than 1mm along the direction from the middle part of the integrated busbar cover plate 120 to the end part of the integrated busbar cover plate 120, then the length increment range of the limiting through holes in the plurality of limiting through hole groups 121 is relatively large. Although the arrangement tolerance of the plurality of batteries 110 can be eliminated, the strength of the integrated busbar cover plate 120 is not favorably improved. Based on this, the length increment range of the limiting through holes in the plurality of limiting through hole groups 121 is 0.5mm-1mm along the direction from the middle part of the integrated busbar cover plate 120 to the end part of the integrated busbar cover plate 120, so that the arrangement tolerance of the plurality of batteries 110 can be eliminated, and the strength of the integrated busbar cover plate 120 can be ensured.

In some possible embodiments, referring to FIGs. 2a, 2b and 3a, the poles of the battery 110 comprise a positive pole 111 and a negative pole 112, and the limiting through hole group 121 comprises a first limiting through hole 1211 and a second limiting through hole 1212. The first limiting through hole 1211 is matched with the positive pole 111, and the second limiting through hole 1212 is matched with the negative pole 112. The integrated busbar cover plate 120 is provided with a sinking groove 122, and the first limiting through hole 1211 and the second limiting through hole 1212 are both located at the groove bottom of the sinking groove 122.

The plurality of batteries 110 arranged along the first direction may be connected in series or in parallel. When the plurality of batteries 110 are connected in series, the positive pole 111 of one battery 110 is electrically connected to the negative pole 112 of the adjacent battery 110. When the plurality of batteries 110 are connected in parallel, the positive pole 111 of one battery 110 is electrically connected to the positive pole 111 of the adjacent battery 110, and the negative pole 112 of one battery 110 is electrically connected to the negative pole 112 of the adjacent battery 110.

The positive pole 111 of one battery 110 being electrically connected to the negative pole 112 of the adjacent battery 110, or the positive pole 111 of one battery 110 being electrically connected to the positive pole 111 of the adjacent battery 110 and the negative pole 112 of one battery 110 being electrically connected to the negative pole 112 of the adjacent battery 110, may be achieved through a busbar or through a conductive wire.

The first limiting through hole 1211 and the second limiting through hole 1212 are both located at the groove bottom of the sinking groove 122 disposed on the integrated busbar cover plate 120. That is, disposing the sinking groove 122 on the integrated busbar cover plate 120 is equivalent to locally thinning the integrated busbar cover plate 120, and the first limiting through hole 1211 and the second limiting through hole 1212 are both located at the thinned portion of the integrated busbar cover plate 120. Therefore, the length of the positive pole 111 extending into the first limiting through hole 1211 and the length of the negative pole 112 extending into the second limiting through hole 1212 can be prevented from being increased, thereby reducing the waste of materials of the positive pole 111 and the negative pole 112. The first limiting through hole and the second limiting through hole are both located at the groove bottom of the sinking groove provided on the integrated busbar cover plate. Consequently, it is possible to avoid increasing the length of the positive pole extending into the first limiting through hole and the length of the negative pole extending into the second limiting through hole, thereby ensuring the energy density of the battery.

The shape and size of the sinking groove 122 are not limited, as long as the first limiting through hole 1211 and the second limiting through hole 1212 can be disposed at the groove bottom of the sinking groove 122.

In addition, the adjacent first limiting through hole 1211 and second limiting through hole 1212 may be located in the same sinking groove 122, or may be located in two sinking grooves 122. In other words, one sinking groove 122 may be provided with one limiting through hole, i.e. the first limiting through hole 1211 or the second limiting through hole 1212. Alternatively, a plurality of limiting through holes may be located in one sinking groove 122. Hereinafter, it is mainly illustrated by taking the example that the adjacent first limit through hole 1211 and second limit through hole 1212 are located in one sinking groove 122.

In some possible embodiments, referring to FIGs. 2a, 2b and 3a, the positive pole 111 of any one battery 110 of the plurality of batteries 110 is aligned with the negative pole 112 of the adjacent battery 110 along the first direction. The sinking groove 122 comprises a plurality of first sinking groove 1221 and a plurality of second sinking groove 1222. The plurality of first sinking groove 1221 are arranged along a first straight line (i.e., a straight line indicated by a broken line A1 in FIG. 3a), and the plurality of second sinking groove 1222 are arranged along a second straight line (i.e., a straight line indicated by a broken line A2 in FIG. 3a). The first straight line and the second straight line are both parallel to the first direction on the plate surface of the integrated busbar cover plate 120. One first limiting through hole 1211 and one second limiting through hole 1212 located adjacent to each other on the first straight line are located at the groove bottom of the same first sinking groove 1221, and one first limiting through hole 1211 and one second limiting through hole 1212 located adjacent to each other on the second straight line are located at the groove bottom of the same second sinking groove 1222.

The staggered arrangement of the positive pole 111 and the negative pole 112 of each adjacent two batteries 110 in the plurality of batteries 110 means that the positive pole 111 of one battery 110 and the negative pole 112 of the adjacent battery 110 are located on the same side.

One first limiting through hole 1211 and one second limiting through hole 1212 located adjacent to each other on the first straight line are located at the groove bottom of the same first sinking groove 1221, and one first limiting through hole 1211 and one second limiting through hole 1212 located adjacent to each other on the second straight line are located at the groove bottom of the same second sinking groove 1222. On the one hand, the number of the sinking grooves 122 disposed on the integrated busbar cover plate 120 is equal to the number of the first limiting through holes 1211 or the number of the second limiting through holes 1212, and thus the number of the sinking grooves 122 disposed on the integrated busbar cover plate 120 is reduced, thereby simplifying the processing technology of the integrated busbar cover plate 120. On the other hand, the positive pole 111 of one battery 110 is electrically connected with the negative pole 112 of the adjacent battery 110, consequently, the electrical connection between the positive pole 111 of one battery 110 and the negative pole 112 of the adjacent battery 110 can be facilitated.

In some possible embodiments, referring to FIG. 3a, the centers of the first sinking grooves 1221 and the centers of the second sinking grooves 1222 are offset in a second direction. The second direction is a direction perpendicular to the first direction and parallel to the plate surface of the integrated busbar cover plate 120.

The second direction is the direction indicated by the arrow Y in FIG. 3a. In addition, the center of the first sinking groove 1221 and the center of the second sinking groove 1222 refer to the geometric centers of the first sinking groove 1221 and the second sinking groove 1222, respectively.

The centers of the first sinking grooves 1221 and the centers of the second sinking grooves 1222 are staggered in the second direction, thus the thinned portion of the integrated busbar cover plate 120 on the first straight line and the thinned portion on the second straight line can be staggered, thereby ensuring the strength of the integrated busbar cover plate 120.

In some possible embodiments, the lengths of the plurality of first sinking grooves 1221 and the plurality of second sinking grooves 1222 in the first direction are all equal; and the projection of the center of the first sinking groove 1221 onto the second straight line in the second direction is located in the middle between the adjacent two second sinking grooves 1222.

Due to the equal lengths of the first sinking grooves 1221 and the second sinking grooves 1222 in the first direction, it is possible to avoid the lengths of the first sinking grooves 1221 and the second sinking grooves 1222 from being set to be progressively increased along the direction from the middle part of the integrated busbar cover plate 120 to the end part. In other words, the design specifications of the first sinking grooves 1221 and the second sinking grooves 1222 are the same, so that the design difficulty and the processing difficulty of the first sinking grooves 1221 and the second sinking grooves 1222 are simplified, and at the same time, the ratio of the total area of the first sinking grooves 1221 and the second sinking grooves 1222 to the total area of the integrated busbar cover plate 120 is reduced, thereby ensuring the strength of the integrated busbar cover plate 120.

In addition, since the distances between every two adjacent batteries 110 in the plurality of arranged batteries 110 are approximately equal and the thickness of each battery 110 is equal, in order to reduce the difficulty of installing the integrated busbar cover plate 120 on the tops of the plurality of batteries 110, the projection of the center of the first sinking groove 1221 on the second straight line along the second direction is located at the middle part between the two adjacent second sinking grooves 1222.

In some possible embodiments, referring to FIG. 4, the first sinking groove 1221 has a first groove wall 122a and a second groove wall 122b along the first direction. Each of the first groove wall 122a and the second groove wall 122b has a first recess 122e. The hole wall, close to the first groove wall 122a, of the first limiting through hole 1211 located in the first sinking groove 1221 is aligned with the first recess 122e on the first groove wall 122a, and the hole wall, close to the second groove wall 122b, of the second limiting through hole 1212 located in the first sinking groove 1221 is aligned with the first recess 122e on the second groove wall 122b. The second sinking groove 1222 has a third groove wall 122c and a fourth groove wall 122d along the first direction. Each of the third groove wall 122c and the fourth groove wall 122d has a second recess 122f. The hole wall, close to the third groove wall 122c, of the first limiting through hole 1211 located in the second sinking groove 1222 is aligned with the second recess 122f on the third groove wall 122c, and the hole wall, close to the fourth groove wall 122d, of the second limiting through hole 1212 located in the second sinking groove 1222 is aligned with the second recess 122f on the fourth groove wall 122d.

The hole wall, close to the first groove wall 122a, of the first limiting through hole 1211 located in the first sinking groove 1221 is aligned with the first recess 122e on the first groove wall 122a, and the hole wall, close to the second groove wall 122b, of the second limiting through hole 1212 located in the first sinking groove 1221 is aligned with the first recess 122e on the second groove wall 122b. On the premise of not increasing the length of the first sinking groove 1221 in the first direction, the hole wall of the first limiting through hole 1211 with the progressively increasing length can extend into the first groove wall 122a of the first sinking groove 1221, and the hole wall of the second limiting through hole 1212 with the progressively increasing length can extend into the second groove wall 122b of the first sinking groove 1221. In order to facilitate the electrical connection between the positive pole 111 extending out of the first limiting through hole 1211 and the negative pole 112 extending out of the second limiting through hole 1212, the first groove wall 122a and the second groove wall 122b are both provided with the first recesses 122e, the first recess 122e on the first groove wall 122a can avoid the positive pole 111 extending out of the first limiting through hole 1211, and the second recess112e on the second groove wall 112b can avoid the negative pole 112 extending out of the second limiting through hole 1212.

Similarly, on the premise of not increasing the length of the second sinking groove 1222 in the first direction, the hole wall of the first limiting through hole 1211 with progressively increasing length can extend into the third groove wall 122c of the second sinking groove 1222, and the hole wall of the second limiting through hole 1212 with progressively increasing length can extend into the fourth groove wall 122d of the second sinking groove 1222. In order to facilitate the electrical connection between the positive pole 111 extending out of the first limiting through hole 1211 and the negative pole 112 extending out of the second limiting through hole 1212, the third groove wall 122c and the fourth groove wall 122d are both provided with the second recesses 122f, the second recess 122f on the third groove wall 122c can avoid the positive pole 111 extending out of the first limiting through hole 1211, and the second recess 122f on the fourth groove wall 122d can avoid the negative pole 112 extending out of the second limiting through hole 1212.

In addition, it may be noted that the hole wall, close to the first groove wall 122a, of the first limiting through hole 1211 located in the first sinking groove 1221 is aligned with the first recess 122e on the first groove wall 122a, and it may be understood that the shape and size of the hole wall of the first limiting through hole 1211 near the first groove wall 122a are the same as those of the first recess 122e, and the description of other alignment is similar to that described above and will not be repeated here.

In some possible embodiments, referring to FIG. 5, the battery module 100 further comprises a first piece 131 and a second piece 132. The first piece 131 is located in the first sinking groove 1221 and connected to the end part of the positive pole 111 and the end part of the negative pole 112 in the first sinking groove 1221, respectively. The second piece 132 is located in the second sinking groove 1222 and connected to the end part of the positive pole 111 and the end part of the negative pole 112 in the second sinking groove 1222, respectively. The sum of the height by which the positive pole 111 extends out of the first limiting through hole 1211 and the thickness of the first piece 131 is less than or equal to the depth of the first sinking groove 1221. The sum of the height by which the negative pole 112 extends out of the second limiting through hole 1212 and the thickness of the second piece 132 is less than or equal to the depth of the second sinking groove 1222.

The sum of the height by which the positive pole 111 extends out of the first limiting through hole 1211 and the thickness of the first piece 131 is less than or equal to the depth of the first sinking groove 1221, and the sum of the height by which the negative pole 112 extends out of the second limiting through hole 1212 and the thickness of the second piece 132 is less than or equal to the depth of the second sinking groove 1222. On the one hand, the surface of the integrated busbar cover plate 120, which faces away from the battery 110, can be prevented from being uneven due to the fact that the first piece 131 protrudes out of the edge of the first sinking groove 1221 and the edge of the second piece 132 protrudes out of the second sinking groove 1222, thereby ensuring the uniformity of the surface of the integrated bus cover plate 120 facing away from the battery 110. On the other hand, the first sinking groove 1221 can limit the first piece 131 when the first piece 131 is installed, and the second sinking groove 1222 can limit the second piece 132 when the second piece 132 is installed, and therefore the efficiency of the arrangement of the first piece 131 and the second piece 132 is improved.

In some possible embodiments, the integrated busbar cover plate 120 is provided with a plurality of explosion-proof valve avoidance through holes 123 arranged at an interval along the first direction. The plurality of explosion-proof valve avoidance through holes 123 correspond to the plurality of batteries one by one. In the first direction, the length of the explosion-proof valve avoidance through hole 123 close to the end part of the integrated busbar cover plate 120 is greater than the length of the explosion-proof valve avoidance through hole 123 located in the middle part of the integrated busbar cover plate 120. The length of the explosion-proof valve avoidance through hole 123 (i.e. the distance denoted by *n* in FIG. 3a) is the size of the explosion-proof valve avoidance through hole 123 along the first direction.

Therefore, the explosion-proof valve on the battery 110 at the end part can be made to face the corresponding explosion-proof valve avoiding through hole 123. When the battery 110 at the end part is in thermal runaway, the safety of the battery module 100 can be prevented from being influenced due to that the air flow released by the explosion-proof valve is blocked by the integrated busbar cover plate 120.

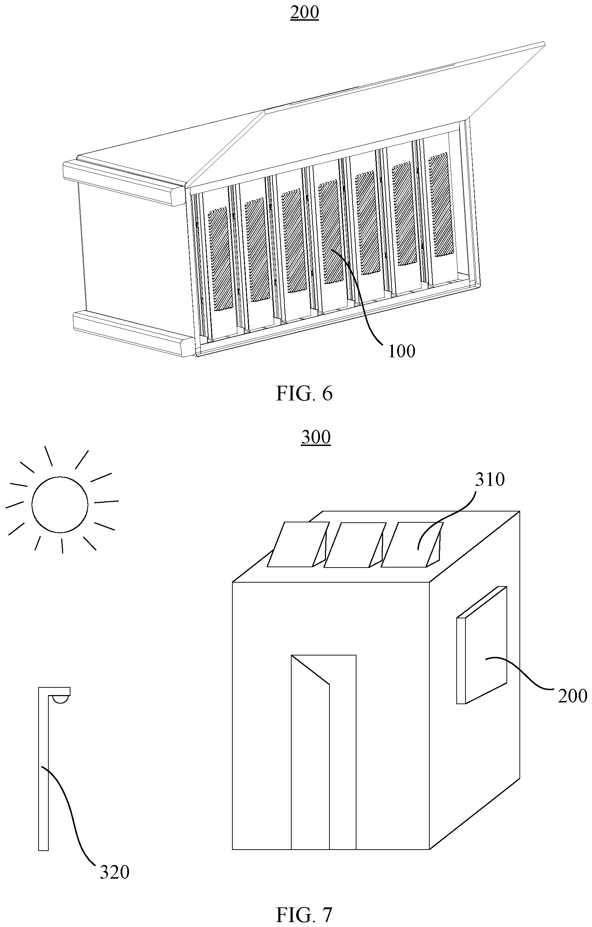

Referring to FIG. 6, an embodiment of the present application further provides an energy storage device 200. The energy storage device 200 comprises the battery module 100 in the above embodiments.

The battery module 100 in the embodiment of the present application may have the same structure as any of the battery modules 100 in the above embodiments, and may bring about the same or similar beneficial effects. Specifically, reference may be made to the description in the above embodiments, which is not repeated herein.

In addition, the energy storage device 200 may be a large energy storage power station, a container-type energy storage device, a small energy storage cabinet, or the like. Optionally, the number of the energy storage devices 200 may be multiple, and the multiple energy storage devices 200 are connected in series or in parallel. Optionally, the multiple energy storage devices 200 are supported and electrically connected by using partition boards. The practical application form of the energy storage device 200 is not strictly limited. Optionally, a protection box is provided on the outer side of the energy storage device 200 and is used for accommodating the energy storage device 200.

The energy storage device 200 of the present embodiment uses the battery module 100 of the above-described embodiment, therefore the assembly efficiency of the energy storage device 200 can be improved.

Referring to FIG. 7, an embodiment of the present application further provides an energy storage system 300. The energy storage system 300 comprises an electric energy conversion device 310, an electrical load 320, and the energy storage device 200 in the foregoing embodiment. The electric energy conversion device 310 is configured to convert energy of other forms into electric energy. The energy storage device 200 is capable of storing at least part of the electric energy converted by the electric energy conversion device 310. The energy storage device 200 is further configured to provide the electric energy to the electrical load. For example, the electrical load is a household appliance and a street lamp, and when the power grid is disconnected or power is cut, the energy storage device 200 supplies power to the household appliance and the street lamp.

In addition, the electric energy conversion device 310 may convert at least one of solar energy, optical energy, wind energy, thermal energy, tidal energy, biomass energy, mechanical energy, and the like into electric energy.

In the present embodiment, the energy storage device 200 in the energy storage system 300 is the energy storage device 200 in the above embodiments, thus the energy storage device 200 in the present embodiment has the technical effects of the energy storage device 200 in the above embodiments. Because the energy storage system comprises the energy storage device in the second aspect, the performance of the energy storage system is improved.

Finally, it may be noted that: the above embodiments are only for illustrating the technical solutions of the present disclosure, and not for limiting the same. Although the present disclosure has been described in detail with reference to the foregoing embodiments, it will be understood by those of ordinary skill in the art that: the technical solutions described in the foregoing embodiments can be modified or some or all of the technical features thereof can be replaced by equivalents; such modifications or replacements do not make the essence of the corresponding technical solutions deviate from the scope of the technical solutions of various embodiments of the present disclosure.

## Claims

1. A battery module (100), comprising:
a plurality of batteries (110) arranged in a first direction, wherein the first direction is a thickness direction of the battery (110);
an integrated busbar cover plate (120) arranged at tops of the plurality of batteries (110), wherein a plurality of limiting through hole groups (121) which are arranged at an interval in the first direction are provided on the integrated busbar cover plate (120), the plurality of limiting through hole groups (121) correspond to the plurality of batteries (110) one by one, the limiting through hole groups (121) are matched with poles of corresponding batteries (110), in the first direction, a length of a limiting through hole in a limiting through hole group (121) near an end part of the integrated busbar cover plate (120) is greater than a length of a limiting through hole in a limiting through hole group (121) located in a middle part of the integrated busbar cover plate (120), and the length of the limiting through hole is a size of the limiting through hole in the first direction.

2. The battery module (100) according to claim 1, wherein the lengths of the limiting through holes in the plurality of limiting through hole groups (121) are increased progressively along a direction from the middle part of the integrated busbar cover plate (120) to the end part of the integrated busbar cover plate (120).

3. The battery module (100) according to claim 2, wherein distances between central axes of the limiting through holes in each adjacent two limiting through hole groups (121) of the plurality of limiting through hole groups (121) are equal.

4. The battery module (100) according to claim 2, wherein a difference between the lengths of the limiting through holes in each adjacent two limiting through hole groups (121) of the plurality of limiting through hole groups (121) ranges from 0.5mm to 1mm along the direction from the middle part of the integrated busbar cover plate (120) to the end part of the integrated busbar cover plate (120).

5. The battery module (100) according to claim 1, wherein the poles of the battery (110) comprise a positive pole (111) and a negative pole (112);
the limiting through hole group (121) comprises a first limiting through hole (1211) and a second limiting through hole (1212), the first limiting through hole (1211) is matched with the positive pole (111), and the second limiting through hole (1212) is matched with the negative pole (112);
the integrated busbar cover plate (120) is provided with a sinking groove (122), and the first limiting through hole (1211) and the second limiting through hole (1212) are both located at a groove bottom of the sinking groove (122).

6. The battery module (100) according to claim 5, wherein
the positive pole (111) of any one of the plurality of batteries (110) and the negative pole (112) of an adjacent battery (110) are arranged along the first direction;
the sinking groove (122) comprises a plurality of first sinking grooves (1221) and a plurality of second sinking grooves (1222), the plurality of first sinking grooves (1221) are arranged along a first straight line, the plurality of second sinking grooves (1222) are arranged along a second straight line, and the first straight line and the second straight line are parallel to the first direction on a plate surface of the integrated busbar cover plate (120);
a first limiting through hole (1211) and a second limiting through hole (1212) located adjacent to each other on the first straight line are located at a groove bottom of a same first sinking groove (1221), and a first limiting through hole (1211) and a second limiting through hole (1212) located adjacent to each other on the second straight line are located at a groove bottom of a same second sinking groove (1222);
a center of the first sinking groove (1221) and a center of the second sinking groove (1222) are staggered in a second direction, and the second direction is a direction perpendicular to the first direction and parallel to the plate surface of the integrated busbar cover plate (120).

7. The battery module (100) according to claim 6, wherein lengths of the plurality of first sinking grooves (1221) and the plurality of second sinking grooves (1222) in the first direction are equal;
a projection of the center of the first sinking groove (1221) on the second straight line along the second direction is located in a middle part between two adjacent second sinking grooves (1222).

8. The battery module (100) according to claim 6, wherein the first sinking groove (1221) has a first groove wall (122a) and a second groove wall (122b) along the first direction, the first groove wall (122a) and the second groove wall (122b) each have a first recess (122e), a hole wall, close to the first groove wall (122a), of the first limiting through hole (1211) located in the first sinking groove (1221) is aligned with the first recess (122e) on the first groove wall (122a), and a hole wall, close to the second groove wall (122b), of the second limiting through hole (1212) located in the first sinking groove (1221) is aligned with the first recess (122e) on the second groove wall (122b);
the second sinking groove (1222) has a third groove wall (122c) and a fourth groove wall (122d) along the first direction, the third groove wall (122c) and the fourth groove wall (122d) each have a second recess (122f), a hole wall, close to the third groove wall (122c), of the first limiting through hole (1211) located in the second sinking groove (1222) is aligned with the second recess (122f) on the third groove wall (122c), and a hole wall, close to the fourth groove wall (122d), of the second limiting through hole (1212) located in the second sinking groove (1222) is aligned with the second recess (122f) on the fourth groove wall (122d).

9. The battery module (100) according to claim 6, wherein
the battery module (100) further comprises a first piece (131) and a second piece (132), the first piece (131) is located in the first sinking groove (1221) and is connected to an end part of the positive pole (111) and an end part of the negative pole (112) in the first sinking groove (1221) respectively, and the second piece (132) is located in the second sinking groove (1222) and is connected to an end part of the positive pole (111) and an end part of the negative pole (112) in the second sinking groove (1222) respectively;
a sum of a height by which the positive pole (111) extends out of the first limiting through hole (1211) and a thickness of the first piece (131) is less than or equal to a depth of the first sinking groove (1221), and a sum of a height by which the negative pole (112) extends out of the second limiting through hole (1212) and a thickness of the second piece (132) is less than or equal to a depth of the second sinking groove (1222).

10. The battery module (100) according to claim 1, wherein the integrated busbar cover plate (120) is provided with a plurality of explosion-proof valve avoidance through holes (123) which are arranged at an interval along the first direction, the plurality of explosion-proof valve avoidance through holes (123) correspond to the batteries (110) one by one, in the first direction, a length of the explosion-proof valve avoidance through hole (123) near the end part of the integrated busbar cover plate (120) is greater than a length of the explosion-proof valve avoidance through hole (123) located in the middle part of the integrated busbar cover plate (120), and the length of the explosion-proof valve avoidance through hole (123) is a size of the explosion-proof valve avoidance through hole (123) along the first direction.

11. An energy storage device (200), comprising a battery module (100) according to any one of claims 1 to 10.

12. An energy storage system (300), comprising:
an electric energy conversion device (310), capable of converting energy of other form into electric energy;
an electrical load (320); and
an energy storage device (200) according to claim 11, wherein the energy storage device (200) is capable of storing at least a portion of the electric energy converted by the electric energy conversion device (310), and the energy storage device (200) is further configured to provide the electric energy to the electrical load (320).
